# EUROPEAN PATENT APPLICATION

(11) **EP 4 759 594 A1**
(43) Date of publication of application: **17.06.2026**
(21) Application number: 24867875.7
(22) Date of filing: 05.07.2024
(51) Int. Cl.: B60K 11/02, B60K 1/04, H01M 10/613, H01M 10/625, H01M 10/6556, H01M 10/6568

(54) **DUMP TRUCK**

(30) Priority: 20.09.2023 JP 2023151857
(71) Applicant: Hitachi Construction Machinery Co., Ltd., Tokyo 110-0015 (JP)
(72) Inventor: SAITO, Kiminori, Tsuchiura-shi, Ibaraki 300-0013 (JP); KANEZAWA, Hiroshi, Tsuchiura-shi, Ibaraki 300-0013 (JP); IKEDA, Jun, Tsuchiura-shi, Ibaraki 300-0013 (JP); NAKATE, Yohei, Tsuchiura-shi, Ibaraki 300-0013 (JP); SAIJO, Kimihiro, Tsuchiura-shi, Ibaraki 300-0013 (JP); KIMURA, Takuya, Tsuchiura-shi, Ibaraki 300-0013 (JP); ABE, Yusuke, Tsuchiura-shi, Ibaraki 300-0013 (JP); MURAYAMA, Yuji, Tsuchiura-shi, Ibaraki 300-0013 (JP); HONDA, Takeshi, Tsuchiura-shi, Ibaraki 300-0013 (JP); KANAYA, Yosuke, Tsuchiura-shi, Ibaraki 300-0013 (JP); SUZUKI, Shotaro, Tsuchiura-shi, Ibaraki 300-0013 (JP)
(74) Representative: Manitz Finsterwald Patent- und Rechtsanwaltspartnerschaft mbB
(86) International application number: PCT/JP2024/024411
(87) International publication number: WO 2025/062792

(57) **Abstract**

The dump truck (1) is equipped with a vehicle body frame (5) to which front wheels (3) and rear wheels (4) are attached, an electric motor (25) to drive the rear wheels (4), a battery device (26) mounted on the vehicle body frame (5) to supply power to the electric motor (25), and electrical device including a converter (34) arranged on the rear side of the battery device (26) . Below the battery device (26), a first refrigerant line (45) through which refrigerant flows to cool the battery device (26) and a second refrigerant line (54) through which refrigerant flows to cool the electrical device are arranged.

## Description

### TECHNICAL FIELD

The present disclosure relates to dump trucks that are preferably used for hauling crushed materials excavated in open-pit mines, quarries, etc.

### BACKGROUND ART

Generally, in open-pit mines and quarries, hydraulic excavators are used to dig out crushed materials such as minerals, and the excavated large quantities of crushed materials are loaded onto dump trucks and transported to designated unloading sites. Dump trucks are configured with a vehicle body to which front and rear wheels are attached, and a load-carrying platform (vessel) mounted to pivot vertically with the rear side of the vehicle body as a fulcrum.

Dump trucks are equipped with a driving electric motor as a power source to rotate the left and right drive wheels. Dump trucks equipped with an engine and a generator driven by the engine perform driving operations by driving the driving electric motor with power from the generator. Dump trucks equipped with an engine have a radiator for cooling engine coolant and a radiator for cooling intake air compressed by a turbocharger (Patent Document 1) .

Recently, dump trucks equipped with a battery device instead of a generator driven by an engine have been proposed, where the driving electric motor is driven by power charged in the battery device. The battery device of the dump truck is composed of plurality battery modules to increase the driving range. Dump trucks equipped with a battery device usually have a cooling system for cooling the battery device and another cooling system for cooling electrical device other than the battery device.

### PRIOR ART DOCUMENT

### PATENT DOCUMENT

Patent Document 1: JP 2017-155660 A

### SUMMARY OF THE INVENTION

Generally, it is desirable for battery devices to be used at a temperature of around 25°C, and they are strictly temperature-controlled using chiller units, etc. On the other hand, electrical device other than battery devices is temperature-controlled to maintain a temperature similar to the ambient temperature using radiators, etc. Therefore, when operating dump trucks in regions where the ambient temperature exceeds 25°C, it is necessary to control the temperature of the battery device to be within a range lower than the ambient temperature, and to control the electrical device other than battery devices to be within a temperature range similar to the ambient temperature.

The present invention has been made in view of the problems of the prior art described above, and its object is to provide a dump truck capable of cooling the battery device and the electrical device other than battery devices to be within appropriate temperature ranges.

The present invention provides a dump truck comprising: a vehicle body frame to which wheels are attached; an electric motor configured to drive the wheels; a battery device mounted on the vehicle body frame and configured to supply power to the electric motor; and at least one electrical device including a converter provided behind the battery device. Below the battery device, a first refrigerant line configured to allow a refrigerant to pass therethrough for cooling the battery device and a second refrigerant line configured to allow a refrigerant to pass therethrough for cooling the at least one electrical device are arranged. The vehicle body frame is equipped with a first tank storing a refrigerant supplied to the first refrigerant line and a second tank storing refrigerant supplied to the second refrigerant line. The first refrigerant line connected to the first tank and the second refrigerant line connected to the second tank are arranged as divided into two groups apart from each other below the battery device.

According to the present invention, by gathering the first refrigerant line and the second refrigerant line below the battery device, the temperature of the refrigerant for the battery device flowing through the first refrigerant line and the temperature of the refrigerant for the electrical device flowing through the second refrigerant line can be maintained at a low temperature using the cooled battery device. This allows efficient cooling of the battery device and the electrical device other than battery devices to be within their respective appropriate temperature ranges.

### BRIEF DESCRIPTION OF THE DRAWINGS

[FIG. 1] is left side view showing a dump truck to which an embodiment of the present invention is applied.
[FIG. 2] is perspective view showing the vehicle body frame alone.

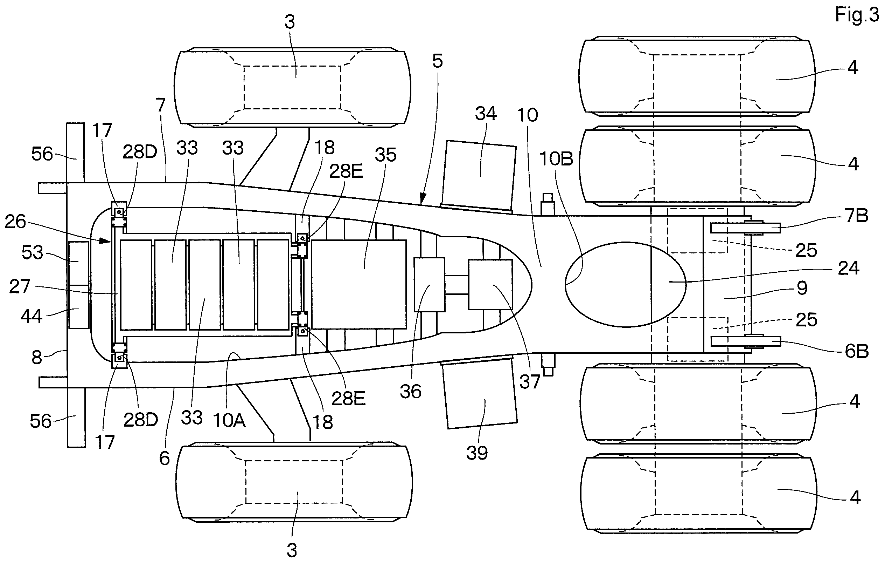

[FIG. 3] is plan view showing the battery device and electrical device mounted on the vehicle body frame.

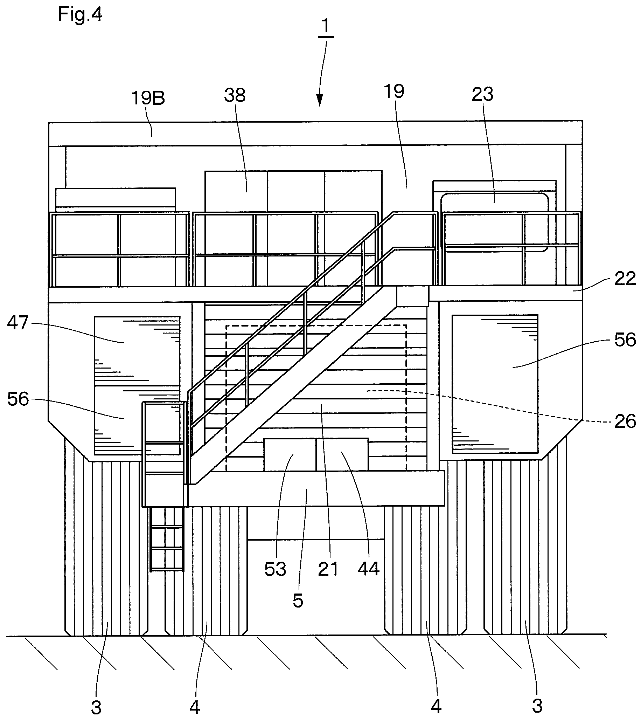

[FIG. 4] is front view of the dump truck with the collector device removed, viewed from the front.
[FIG. 5] is perspective view from below showing the battery device, the first refrigerant line, and the second refrigerant line.
[FIG. 6] is left side view showing the battery device, electrical device, the first refrigerant line, the second refrigerant line, etc., with the vehicle body frame omitted.
[FIG. 7] is right side view showing the battery device, electrical device, the second refrigerant line, etc., with the vehicle body frame omitted.
[FIG. 8] is bottom view showing the battery device, electrical device, the first refrigerant line, the second refrigerant line, etc., from below the vehicle body frame.
[FIG. 9] is configuration diagram showing the first cooling system for cooling the battery device.
[FIG. 10] is configuration diagram showing the second cooling system for cooling electrical device other than the battery device.

### MODE FOR CARRYING OUT THE INVENTION

Below, an embodiment of the present invention is exemplified by a trolley-type dump truck, and detailed explanation is provided with reference to the accompanying drawings. In the embodiment, the traveling direction of the dump truck is described as the longitudinal direction, and the direction orthogonal to the traveling direction is described as the lateral direction.

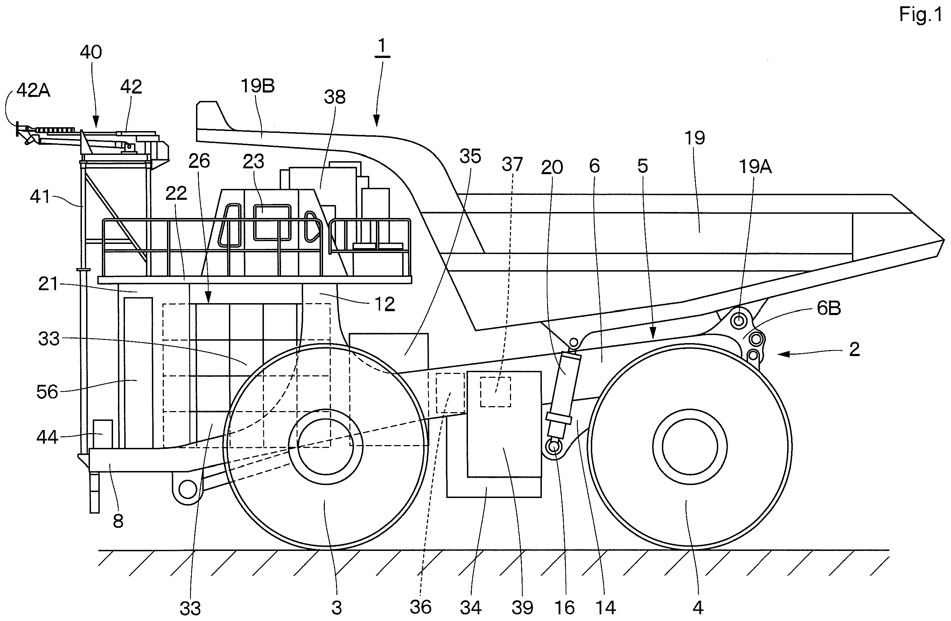

In FIG. 1, the trolley-type dump truck 1 travels by supplying power from trolley overhead wires installed in mines, etc., to the driving electric motor via a collector device (trolley). The dump truck 1 is configured with a self-propelled vehicle body 2 equipped with left and right front wheels 3 and left and right rear wheels 4, and a load-carrying platform 19 mounted on the vehicle body 2 to tilt (rise and fall) , and hauls minerals excavated by hydraulic excavators, etc. (not shown) loaded onto the load-carrying platform 19. The vehicle body 2 of the dump truck 1 is configured to include a vehicle body frame 5, a deck 22, a cab 23, etc., as described later.

The left and right front wheels 3 are rotatably provided on the front side of the vehicle body 2, forming steering wheels. The front wheels 3 are supported by the vehicle body frame 5 via front wheel suspension, and vibrations transmitted from the front wheels 3 to the vehicle body 2 are mitigated. The left and right rear wheels 4 are rotatably provided on the rear side of the vehicle body 2 and are driven to rotate by a driving device 24 equipped with an electric motor 25, as described later. The driving device 24 for the rear wheels 4 is attached to the vehicle body frame 5 via rear wheel suspension, and vibrations transmitted from the rear wheels 4 to the vehicle body 2 are mitigated.

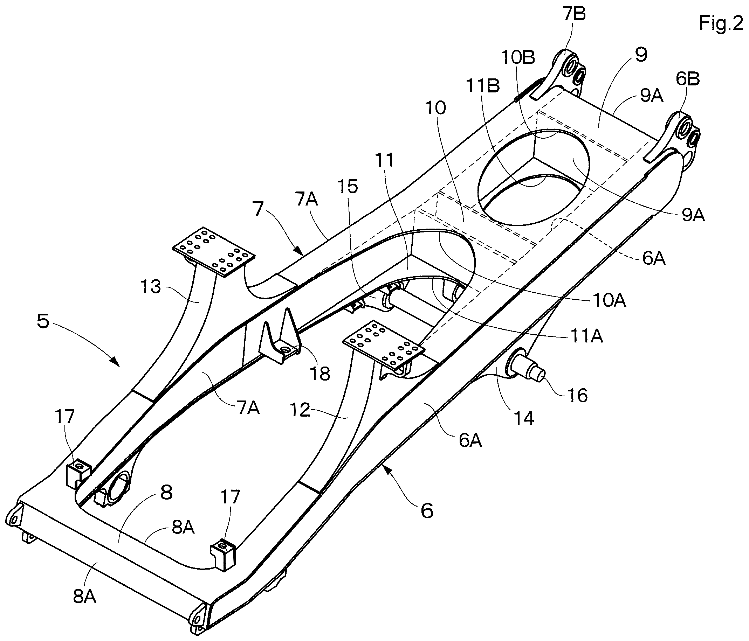

The vehicle body frame 5 serves as the base of the vehicle body 2 and consists of a robust support structure extending in the longitudinal direction. As shown in FIG. 2, the vehicle body frame 5 is configured to include a left frame 6, a right frame 7, a front frame 8, a rear frame 9, an upper plate 10, a lower plate 11, etc., as described later.

The left frame 6 is arranged on the left side of the vehicle body frame 5. The left frame 6 is configured to include left and right side plates 6A facing each other in the lateral direction, an upper plate 10 closing the upper ends of the left and right side plates 6A, and a lower plate 11 connecting the lower ends of the left and right side plates 6A, and has a box structure with a square cross-section extending in the longitudinal direction. The right frame 7 is arranged on the right side of the vehicle body frame 5. The right frame 7 is configured to include left and right side plates 7A facing each other in the lateral direction, an upper plate 10 closing the upper ends of the left and right side plates 7A, and a lower plate 11 connecting the lower ends of the left and right side plates 7A, and has a box structure with a square cross-section extending in the longitudinal direction.

The left frame 6 and the right frame 7 extend in the longitudinal direction while facing each other with a gap in the lateral direction, and the lateral gap between the left frame 6 and the right frame 7 is set larger at the front side compared to the rear side of the vehicle body frame 5. A left rear-end bracket 6B is provided at the rear end of the left frame 6, and a right rear-end bracket 7B is provided at the rear end of the right frame 7, and these left rear-end bracket 6B and right rear-end bracket 7B face each other in the lateral direction.

The front frame 8 is arranged on the front side of the vehicle body frame 5. The front frame 8 has a box structure extending in the lateral direction, including front and rear side plates 8A facing each other in the longitudinal direction, an upper plate 10, and a lower plate 11, and connects the front end of the left frame 6 and the front end of the right frame 7. The rear frame 9 is arranged on the rear side of the vehicle body frame 5. The rear frame 9 has a box structure extending in the lateral direction, including front and rear side plates 9A facing each other in the longitudinal direction, an upper plate 10, and a lower plate 11, and connects the rear end of the left frame 6 and the rear end of the right frame 7.

The upper plate 10 is provided at the upper ends of the left frame 6, right frame 7, front frame 8, and rear frame 9. The upper plate 10 closes the upper ends of the left frame 6, right frame 7, front frame 8, and rear frame 9, and connects the left frame 6 and the right frame 7. The upper plate 10 is provided with a front opening 10A and a rear opening 10B positioned between the left frame 6 and the right frame 7.

The lower plate 11 is provided at the lower ends of the left frame 6, right frame 7, front frame 8, and rear frame 9, facing the upper plate 10 in the vertical direction. The lower plate 11 closes the lower ends of the left frame 6, right frame 7, front frame 8, and rear frame 9, and connects the left frame 6 and the right frame 7. The lower plate 11 is provided with a front opening 11A and a rear opening 11B at positions corresponding to the front opening 10A and rear opening 10B of the upper plate 10.

The left strut 12 and the right strut 13 are provided at positions closer to the front from the central part in the longitudinal direction of the vehicle body frame 5, facing each other in the lateral direction. The left strut 12 and the right strut 13 each have a hollow box structure shaped like a mountain. The left strut 12 is protruded upward from the upper plate 10 constituting the left frame 6, and the right strut 13 is protruded upward from the upper plate 10 constituting the right frame 7. Deck 22 and others are attached to the upper ends of the left pillar 12 and right pillar 13.

The left cylinder bracket 14 and right cylinder bracket 15 are positioned towards the rear from the middle part of the vehicle body frame 5 in the longitudinal direction, facing each other in the lateral direction. The left cylinder bracket 14 protrudes downward from the lower plate 11 that constitutes the left frame 6, and the right cylinder bracket 15 protrudes downward from the lower plate 11 that constitutes the right frame 7. A cylinder support shaft 16 extending in the lateral direction is inserted at the lower end side of the left cylinder bracket 14 and right cylinder bracket 15. The lower end side of the hoist cylinder 20, which will be described later, is attached to both ends of the cylinder support shaft 16 in the lateral direction.

Left and right front brackets 17 are provided near the left front corner where the left frame 6 and front frame 8 intersect, and near the right front corner where the right frame 7 and front frame 8 intersect. These left and right front brackets 17 face each other in the lateral direction across the front opening 10A of the upper plate 10, and the left and right front extension plates 28D of the battery frame 27, which will be described later, are attached. Additionally, left and right rear brackets 18 are provided on the left frame 6 and right frame 7, positioned behind the left and right front brackets 17. These left and right rear brackets 18 face each other in the lateral direction across the front opening 10A of the upper plate 10, and the left and right rear extension plates 28E of the battery frame 27 are attached.

The load-carrying platform (vessel) 19 is mounted on the vehicle body frame 5 in a tiltable manner. The load-carrying platform 19 is formed as a large bottomed container for loading crushed materials such as minerals excavated by a hydraulic excavator. The rear bottom of the load-carrying platform 19 is tiltably connected to the left rear end bracket 6B of the left frame 6 and the right rear end bracket 7B of the right frame 7 via a connecting pin 19A. On the front side of the load-carrying platform 19, an eave portion 19B extending horizontally forward from the top is integrally provided. The eave portion 19B of the load-carrying platform 19 extends to the front end side of the deck 22, covering the cab 23 from above.

The hoist cylinder 20 is provided in pairs in the lateral direction between the vehicle body frame 5 and the load-carrying platform 19 (only the left side is shown). The hoist cylinder 20 consists of, for example, a hydraulic cylinder, and tilts the front side of the load-carrying platform 19 up and down relative to the vehicle body frame 5. One end side (lower end side) of the hoist cylinder 20 is attached to the cylinder support shaft 16, and the other end side (upper end side) of the hoist cylinder 20 is attached to the underside of the load-carrying platform 19. Therefore, by extending the hoist cylinder 20, the front side (eave portion 19B side) of the load-carrying platform 19 is lifted upward around the connecting pin 19A, allowing the minerals loaded on the load-carrying platform 19 to be discharged backward.

The front support member 21 is provided on the front end side of the vehicle body frame 5. The front support member 21 is formed in a frame shape surrounded by left and right side panels and a front panel (grill), and inside the front support member 21, a battery device 26 and others are housed. The front support member 21, along with the left pillar 12 and right pillar 13 of the vehicle body frame 5, also serves to support the deck 22 and others from below.

The deck 22 is positioned in front of the load-carrying platform 19 and is provided on the upper side of the front support member 21. The deck 22 is formed in a long rectangular flat shape in the lateral direction and extends horizontally while being supported from below by the left pillar 12, right pillar 13, and front support member 21 of the vehicle body frame 5. On the deck 22, a cab 23, a control cabinet 38, which will be described later, and others are mounted, and the upper surface of the deck 22 serves as a flat passage surface for operators and others to pass through.

The cab 23 is provided on the upper left side of the deck 22, forming an operating room for the operator to board. Inside the cab 23, an operator's seat, a steering handle, a start switch, an accelerator pedal, a brake pedal, and control levers (none of which are shown) are provided.

A rear wheel-side traveling device 24 is provided on the rear side of the vehicle body frame 5. The traveling device 24 is attached to the vehicle body frame 5 via a rear wheel-side suspension device. The traveling device 24 is equipped with left and right traveling electric motors 25, and the rotation of these left and right electric motors 25 is transmitted to the left and right rear wheels 4 via a reduction mechanism (not shown).

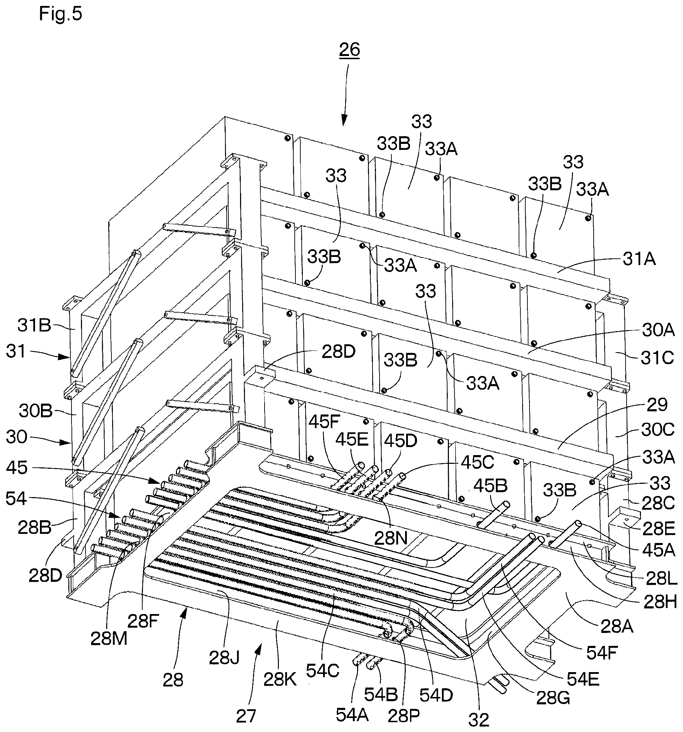

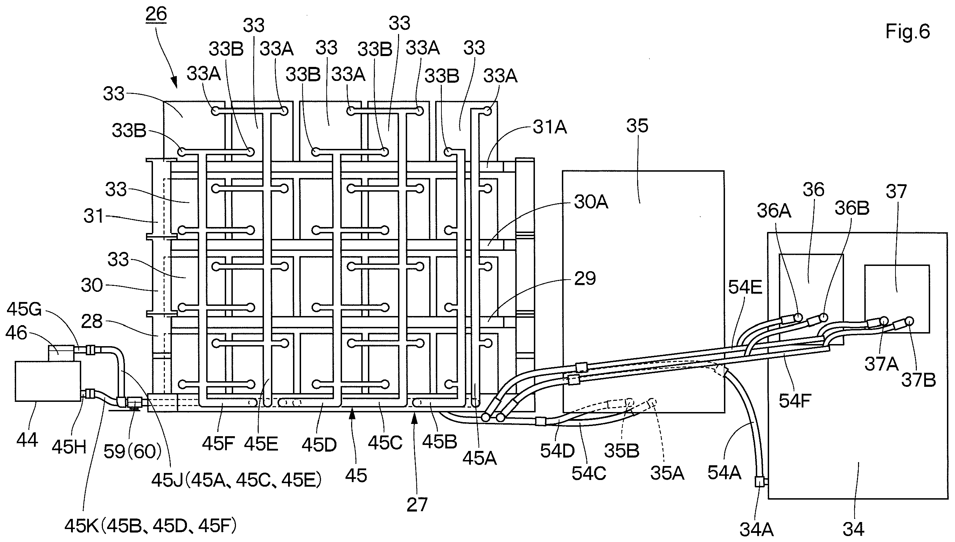

Next, the battery device 26 mounted on the vehicle body frame 5 will be described with reference to FIGS. 5 and 6.

The battery device 26 is located below the deck 22 and is mounted on the front part of the vehicle body frame 5. The battery device 26 stores power supplied to electrical device mounted on the dump truck 1, such as the traveling electric motor 25. The battery device 26 is composed of a multi-stage battery frame 27 and plurality battery modules 33. The battery frame 27 has plurality support frame bodies stacked in the vertical direction and is supported by the vehicle body frame 5. Plurality battery modules 33 are individually attached to the support frame bodies of the battery frame 27.

The battery frame 27 consists of a first support frame 28 positioned at the lowest level, a second support frame 29 detachably mounted above the first support frame 28, a third support frame 30 detachably mounted above the second support frame 29, and a fourth support frame 31 detachably mounted above the third support frame 30.

The first support frame 28 is composed of a rectangular frame body 28A extending in the longitudinal direction, left and right front leg parts 28B positioned at the front end of the frame body 28A, and left and right rear leg parts 28C positioned at the rear end of the frame body 28A. Plurality battery modules 33 are mounted in a row in the longitudinal direction on the frame body 28A. At the intermediate part in the vertical direction of the left and right front leg parts 28B, front side protruding plates 28D extending in the lateral direction from the front leg parts 28B are provided. At the intermediate part in the vertical direction of the left and right rear leg parts 28C, rear side protruding plates 28E extending in the lateral direction from the rear leg parts 28C are provided.

The frame body 28A of the first support frame 28 is formed into a rectangular frame shape by the front plate 28F, rear plate 28G, left plate 28H, right plate 28J, lower plate 28K, and upper plate 28L. The front plate 28F and rear plate 28G face each other with a gap in the longitudinal direction, and the left plate 28B and right plate 28J face each other with a gap in the lateral direction. A frame-shaped lower plate 28K is fixed to the lower ends of the front plate 28F, rear plate 28G, left plate 28H, and right plate 28J. A frame-shaped upper plate 28L is fixed to the upper ends of the front plate 28F, rear plate 28G, left plate 28H, and right plate 28J, and the lower plate 28K and upper plate 28L face each other in the vertical direction.

The second support frame 29 is formed into a rectangular frame shape extending in the longitudinal direction, similar to the frame body 28A of the first support frame 28. The second support frame 29 is detachably mounted on the first support frame 28 using fasteners such as bolts. Plurality battery modules 33 are mounted in a row in the longitudinal direction on the second support frame 29.

The third support frame 30 is composed of a rectangular frame body 30A extending in the longitudinal direction, left and right front leg parts 30B positioned at the front end of the frame body 30A, and left and right rear leg parts 30C positioned at the rear end of the frame body 30A. The lower ends of the left and right front leg parts 30B are detachably mounted to the upper ends of the front leg parts 28B of the first support frame 28 using fasteners such as bolts, and the lower ends of the left and right rear leg parts 30C are detachably mounted to the upper ends of the rear leg parts 28C of the first support frame 28 using fasteners such as bolts. Thus, the third support frame 30 is positioned on the second support frame 29, and plurality battery modules 33 are mounted in a row in the longitudinal direction on the frame body 30A.

The fourth support frame 31 is composed of a rectangular frame body 31A extending in the longitudinal direction, left and right front leg parts 31B positioned at the front end of the frame body 31A, and left and right rear leg parts 31C positioned at the rear end of the frame body 31A. The lower ends of the left and right front leg parts 31B are detachably mounted to the upper ends of the front leg parts 30B of the third support frame 30 using fasteners such as bolts. The lower ends of the left and right rear leg parts 31C are detachably mounted to the upper ends of the rear leg parts 30C of the third support frame 30 using fasteners such as bolts. Thus, the fourth support frame 31 is positioned on the third support frame 30, and plurality battery modules 33 are mounted in a row in the longitudinal direction on the frame body 31A.

The refrigerant pipeline housing section 32 is provided inside the frame body 28A of the first support frame 28. Specifically, the refrigerant pipeline housing section 32 is configured as a rectangular space surrounded by the front plate 28F, rear plate 28G, left plate 28H, and right plate 28J that constitute the frame body 28A. The refrigerant pipeline housing section 32 of the battery frame 27 houses plurality pipes constituting the first refrigerant pipeline 45 and plurality pipes constituting the second refrigerant pipeline 54, as described later.

Plurality pipe insertion holes 28M are formed in a row in the lateral direction on the front plate 28F of the frame body 28A. Plurality pipe insertion holes 28N are formed in a row in the longitudinal direction on the left plate 28H, and plurality pipe insertion holes 28P are formed in a row in the longitudinal direction on the right plate 28J. Plurality pipes constituting the first refrigerant pipeline 45 and plurality pipes constituting the second refrigerant pipeline 54 are mounted on the first support frame 28 in a state where they are inserted through these pipe insertion holes 28M, 28N, and 28P. Thus, the first refrigerant pipeline 45 and the second refrigerant pipeline 54 are positioned below the battery device 26 in a state where they are fixed to the first support frame 28 of the battery frame 27.

Plurality battery modules 33 are individually mounted on the battery frame 27. The battery module 33 consists of rechargeable batteries such as lithium-ion batteries and is formed into a block shape extending in the lateral direction. These plurality battery modules 33 supply power to electrical device such as the driving electric motor 25.

The battery modules 33 are detachably mounted using fasteners such as bolts, with five modules each on the first support frame 28, second support frame 29, third support frame 30, and fourth support frame 31. Thus, a total of 20 battery modules 33 are consolidated into one battery frame 27, forming a large-capacity battery device 26. The left and right front side protruding plates 28D of the battery frame 27 (first support frame 28) are mounted to the front bracket 17 of the vehicle body frame 5, and the left and right rear side protruding plates 28E are mounted to the rear bracket 18 of the vehicle body frame 5. Thus, the battery device 26 is supported by the vehicle body frame 5 in a state where it is positioned between the left frame 6 and right frame 7.

Here, the battery module 33 generates heat by charging and discharging power. Therefore, a water jacket (not shown) through which a refrigerant such as cooling water circulates is provided inside the battery module 33. Thus, the battery module 33 maintains an appropriate operating temperature of approximately 25°C. Each battery module 33 is equipped with a refrigerant inlet 33A for the inflow of refrigerant into the water jacket and a refrigerant outlet 33B for the outflow of refrigerant from the water jacket.

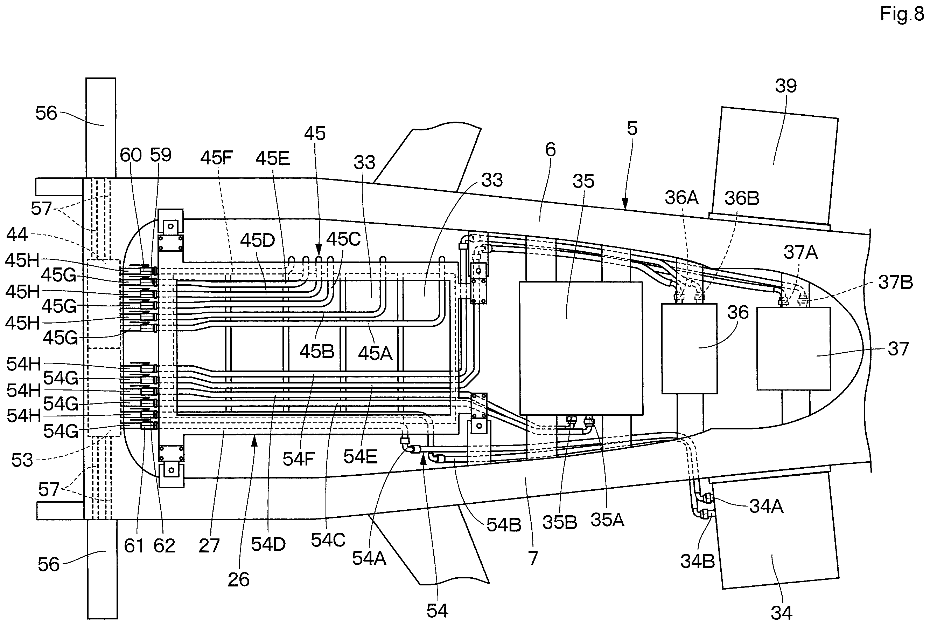

On the rear side of the battery device 26, electrical device such as a converter 34, reactor 35, hydraulic pump drive motor 36, and pump drive inverter 37 are arranged. The converter 34 is positioned between the right front wheel 3 and rear wheel 4 and is mounted to the right frame 7 of the vehicle body frame 5. The converter 34 is a DC/DC converter that converts the voltage of the direct current power supplied from the battery device 26 to the driving electric motor 25. The converter 34 has a water jacket (not shown) through which cooling water circulates, a refrigerant inlet 34A for the inflow of cooling water, and a refrigerant outlet 34B for the outflow of cooling water (see Fig. 8).

The reactor 35 is positioned on the rear side of the battery device 26 and is mounted between the left frame 6 and right frame 7 of the vehicle body frame 5. The reactor 35 is electrically connected between the battery device 26 and the converter 34, and is equipped with an LC filter to remove high-frequency noise and a circuit breaker to protect the battery device 26. The reactor 35 has a water jacket (not shown) through which cooling water circulates, a refrigerant inlet 35A for the inflow of cooling water, and a refrigerant outlet 35B for the outflow of cooling water.

The hydraulic pump drive motor 36 is positioned on the rear side of the reactor 35 and is mounted between the left frame 6 and right frame 7 of the vehicle body frame 5. The hydraulic pump drive motor 36 is an electric motor that drives a hydraulic pump (not shown) using power from the battery device 26. Thus, hydraulic fluid from the hydraulic pump is supplied to hydraulic equipment such as the hoist cylinder 20 and power steering device (not shown) . The hydraulic pump drive motor 36 has a water jacket (not shown) through which cooling water circulates, a refrigerant inlet 36A for the inflow of cooling water, and a refrigerant outlet 36B for the outflow of cooling water.

The pump drive inverter 37 is positioned on the rear side of the hydraulic pump drive motor 36 and is mounted between the left frame 6 and right frame 7 of the vehicle body frame 5. The pump drive inverter 37 controls the power supplied to the hydraulic pump drive motor 36 and controls the operation of the hydraulic pump drive motor 36. The pump drive inverter 37 has a water jacket (not shown) through which cooling water circulates, a refrigerant inlet 37A for the inflow of cooling water, and a refrigerant outlet 37B for the outflow of cooling water.

The control cabinet 38 is mounted on the upper side of the deck 22, alongside the right side of the cab 23. The control cabinet 38 is configured to include an inverter and other components to control the driving electric motor 25. The hydraulic fluid tank 39 is mounted to the left frame 6 that constitutes the vehicle body frame 5. The hydraulic fluid tank 39 is positioned between the left front wheel 3 and rear wheel 4 and is mounted to the left frame 6, storing hydraulic fluid to be supplied to hydraulic equipment such as the hoist cylinder 20 mounted on the vehicle body frame 5.

The current collector 40 is provided on the pantograph support 41 mounted at the front end of the vehicle body frame 5 (see Fig. 1). The current collector 40 gathers power from trolley overhead wires (not shown) installed along the travel path of the dump truck 1 in mines and supplies it to the driving electric motor 25, battery device 26, and other components. The current collector 40 includes a pantograph 42, which is extendably provided between the pantograph support 41 and the trolley overhead wire, and a collector shoe 42A that slides against the trolley overhead wire as the pantograph 42 extends.

Next, the first cooling system 43, which cools each battery module 33 of the battery device 26, and the second cooling system 52, which cools the electrical device (converter 34, reactor 35, hydraulic pump drive motor 36, pump drive inverter 37) located behind the battery device 26, will be described.

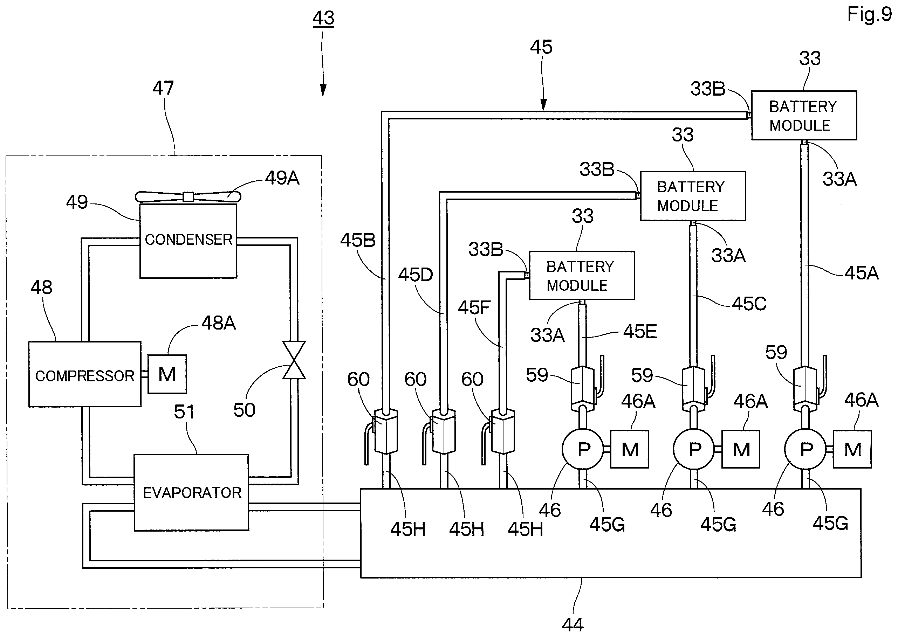

The first cooling system 43 cools the battery device 26, which is composed of plurality battery modules 33. As shown in FIG. 9, the first cooling system 43 is composed of a first tank 44, a first refrigerant line 45, plurality cooling water pumps 46, and a chiller unit 47.

The first tank 44 is located in front of the front support member 21 and is mounted at the front end of the vehicle body frame 5. The first tank 44 stores cooling water that is supplied to plurality battery modules 33 through the first refrigerant line 45. The plurality battery modules 33 and the first tank 44 are connected via the first refrigerant line 45. The first refrigerant line 45 is composed of, for example, three supply pipes 45A, 45C, 45E, and three discharge pipes 45B, 45D, 45F.

One end of the supply pipe 45A is connected to the first tank 44 via a connection part 45G. The other end of the supply pipe 45A is connected to the refrigerant inlet 33A of the four battery modules 33, which are the rearmost among the plurality battery modules 33 mounted on the battery frame 27. One end of the discharge pipe 45B is connected to the first tank 44 via a connection part 45H. The other end of the discharge pipe 45B is connected to the refrigerant outlet 33B of the four battery modules 33, which are the rearmost.

One end of the supply pipe 45C is connected to the first tank 44 via a connection part 45G. The other end of the supply pipe 45C is connected to the refrigerant inlet 33A of the eight battery modules 33, which are the second and third from the rear among the plurality battery modules 33. One end of the discharge pipe 45D is connected to the first tank 44 via a connection part 45H. The other end of the discharge pipe 45D is connected to the refrigerant outlet 33B of the eight battery modules 33, which are the second and third from the rear. One end of the supply pipe 45E is connected to the first tank 44 via a connection part 45G. The other end of the supply pipe 45E is connected to the refrigerant inlet 33A of the eight battery modules 33, which are the fourth and fifth from the rear among the plurality battery modules 33. One end of the discharge pipe 45F is connected to the first tank 44 via a connection part 45H. The other end of the discharge pipe 45F is connected to the refrigerant outlet 33B of the eight battery modules 33, which are the fourth and fifth from the rear.

Here, as shown in FIG. 6, the supply pipes 45A, 45C, 45E of the first refrigerant line 45, which are connected to the refrigerant inlet 33A of the plurality battery modules 33, extend above the connection part 45G with the first tank 44. Additionally, the discharge pipes 45B, 45D, 45F of the first refrigerant line 45, which are connected to the refrigerant outlet 33B of the plurality battery modules 33, extend above the connection part 45H with the first tank 44.

On one end of the supply pipes 45A, 45C, 45E connected to the first tank 44, a first supply-side bent part 45J is provided, which bends in a crank shape from the first tank 44 towards the underside of the battery device 26 (in FIG. 6, the first supply-side bent part 45J provided on the supply pipes 45A, 45C, 45E is shown overlapping in the left-right direction). Additionally, on one end of the discharge pipes 45B, 45D, 45F connected to the first tank 44, a first discharge-side bent part 45K is provided, which bends gently from the first tank 44 towards the underside of the battery device 26 (in FIG. 6, the first discharge-side bent part 45K provided on the discharge pipes 45B, 45D, 45F is shown overlapping in the left-right direction).

The cooling water pumps 46 are provided at the connection parts 45G between the supply pipes 45A, 45C, 45E of the first refrigerant line 45 and the first tank 44. The cooling water pumps 46 are driven by a motor 46A and supply the cooling water stored in the first tank 44 to the refrigerant inlet 33A of the battery modules 33 through the supply pipes 45A, 45C, 45E. The cooling water supplied to the battery modules 33 from the refrigerant inlet 33A cools the battery modules 33 and then returns to the first tank 44 through the discharge pipes 45B, 45D, 45F of the first refrigerant line 45 from the refrigerant outlet 33B. The cooling water stored in the first tank 44 is cooled by the chiller unit 47.

The chiller unit 47 is located adjacent to the right side of the front support member 21 and is positioned under the deck 22. As shown in FIG. 9, the chiller unit 47 is composed of a compressor 48 driven by a motor 48A, a condenser 49 with a cooling fan 49A, an expansion valve 50, and an evaporator 51. The compressor 48 compresses the refrigerant vaporized in the evaporator 51, and the condenser 49 liquefies the compressed refrigerant by heat exchange and condensation. The expansion valve 50 reduces the pressure of the high-pressure refrigerant liquefied by the condenser 49 to a state where it can easily evaporate. The evaporator 51 cools the cooling water stored in the first tank 44 by evaporating (vaporizing) the depressurized refrigerant.

During the operation of the dump truck 1, the battery device 26, composed of plurality battery modules 33, is efficiently cooled by the first cooling system 43 equipped with the chiller unit 47. This allows the temperature of the battery device 26 to be maintained within an appropriate range of about 25°C.

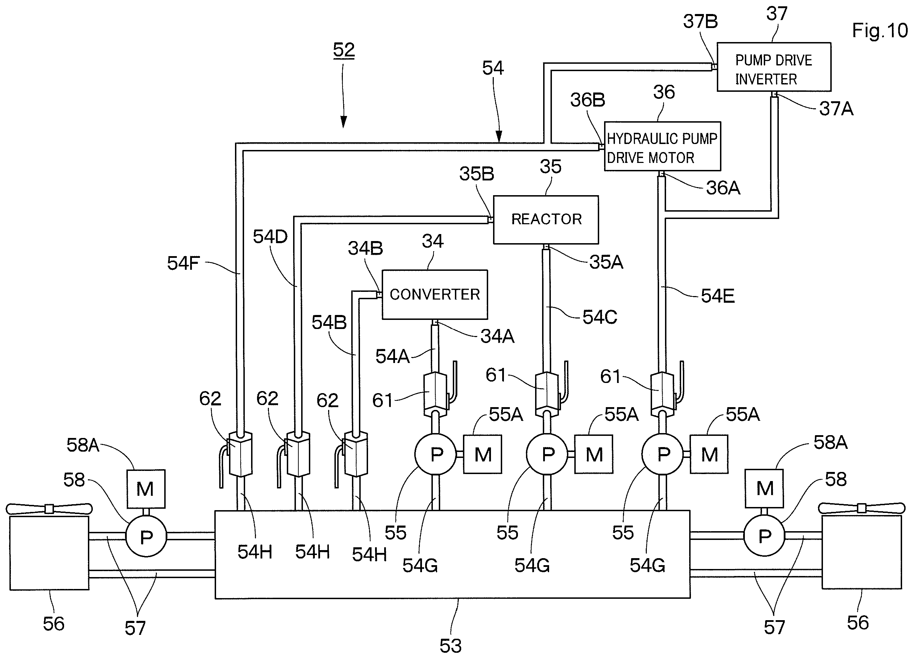

The second cooling system 52 cools the electrical device located behind the battery device 26, namely the converter 34, reactor 35, hydraulic pump drive motor 36, and pump drive inverter 37. The temperature range in which these electrical devices such as the converter 34 operate properly is generally set higher than the appropriate temperature range for the battery device 26. As shown in FIG. 10, the second cooling system 52 is composed of a second tank 53, a second refrigerant line 54, plurality cooling water pumps 55, and a radiator 56.

The second tank 53 is mounted at the front end of the vehicle body frame 5, adjacent to the right side of the first tank 44. The second tank 53 stores cooling water that is supplied to the converter 34, reactor 35, hydraulic pump drive motor 36, and pump drive inverter 37 through the second refrigerant line 54. The converter 34, reactor 35, hydraulic pump drive motor 36, and pump drive inverter 37 are each connected to the second tank 53 via the second refrigerant line 54. The second refrigerant line 54 is composed of, for example, three supply pipes 54A, 54C, 54E, and three discharge pipes 54B, 54D, 54F.

One end of the supply pipe 54A is connected to the second tank 53 via a connection part 54G, and the other end of the supply pipe 54A is connected to the refrigerant inlet 34A of the converter 34. One end of the discharge pipe 54B is connected to the second tank 53 via a connection part 54H, and the other end of the discharge pipe 54B is connected to the refrigerant outlet 34B of the converter 34.

One end of the supply pipe 54C is connected to the second tank 53 via a connection part 54G, and the other end of the supply pipe 54C is connected to the refrigerant inlet 35A of the reactor 35. One end of the discharge pipe 54D is connected to the second tank 53 via a connection part 54H, and the other end of the discharge pipe 54D is connected to the refrigerant outlet 35B of the reactor 35. One end of the supply pipe 54E is connected to the second tank 53 via a connection part 54G, and the other end of the supply pipe 54E is connected to the refrigerant inlet 36A of the hydraulic pump drive motor 36 and the refrigerant inlet 37A of the pump drive inverter 37. One end of the discharge pipe 54F is connected to the second tank 53 via a connection part 54H, and the other end of the discharge pipe 54F is connected to the refrigerant outlet 36B of the hydraulic pump drive motor 36 and the refrigerant outlet 37B of the pump drive inverter 37.

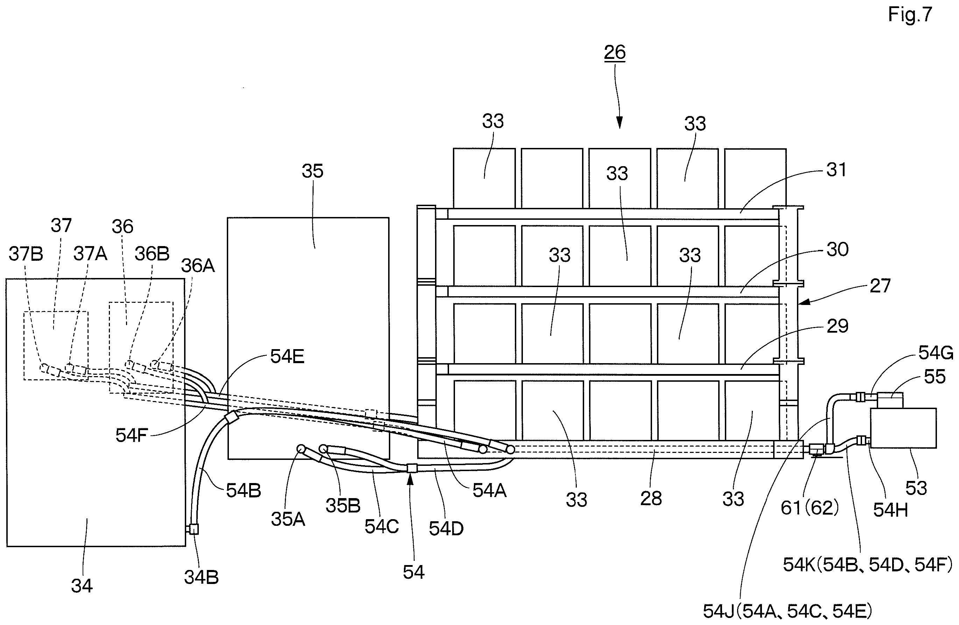

Here, as shown in FIG. 7, the refrigerant inlets 36A of the hydraulic pump drive motor 36 and 37A of the pump drive inverter 37 are positioned higher than the connection part 54G between the supply-side pipe 54E and the second tank 53. Additionally, the refrigerant outlets 36B of the hydraulic pump drive motor 36 and 37B of the pump drive inverter 37 are positioned higher than the connection part 54H between the discharge-side pipe 54F and the second tank 53.

On one end of the supply-side pipes 54A, 54C, 54E connected to the second tank 53, a second supply-side bent part 54J is provided, which bends in a crank shape from the second tank 53 towards the underside of the battery device 26 (as shown in FIG. 7, the second supply-side bent part 54J provided on the supply-side pipes 54A, 54C, 54E is shown overlapping in the left-right direction) . Additionally, on one end of the discharge-side pipes 54B, 54D, 54F connected to the second tank 53, a second discharge-side bent part 54K is provided, which gently bends from the second tank 53 towards the underside of the battery device 26 (as shown in FIG. 7, the second discharge-side bent part 54K provided on the discharge-side pipes 54B, 54D, 54F is shown overlapping in the left-right direction).

The cooling water pump 55 is provided at the connection part 54G between the supply-side pipes 54A, 54C, 54E of the second refrigerant line 54 and the second tank 53. The cooling water pump 55 is driven by motor 55A and supplies the cooling water stored in the second tank 53 through the supply-side pipes 54A, 54C, 54E to the converter 34, reactor 35, hydraulic pump drive motor 36, and pump drive inverter 37 via the refrigerant inlets 34A, 35A, 36A, 37A. The cooling water supplied to electrical device such as the converter 34 cools them and then returns to the second tank 53 through the discharge-side pipes 54B, 54D, 54F via the refrigerant outlets 34B, 35B, 36B, 37B. The cooling water stored in the second tank 53 is cooled by the radiator 56.

The radiator 56 is positioned adjacent to both the left and right sides of the front support member 21. A chiller unit 47 is placed on the right-side radiator 56. The left and right radiators 56 are each connected to the second tank 53 via radiator lines 57. In the middle of the radiator line 57, a circulation pump 58 driven by motor 58A is provided. The cooling water stored in the second tank 53 is supplied to the radiator 56 by the circulation pump 58 and returns to the second tank 53 after being dissipated by the radiator 56. In this way, during the operation of the dump truck 1, electrical devices other than the battery device 26 (converter 34, reactor 35, hydraulic pump drive motor 36, pump drive inverter 37) are cooled by the second cooling system 52, allowing the temperature of these electrical devices to be maintained within an appropriate range.

Next, the arrangement of the supply-side pipes 45A, 45C, 45E and discharge-side pipes 45B, 45D, 45F that make up the first refrigerant line 45, and the supply-side pipes 54A, 54C, 54E and discharge-side pipes 54B, 54D, 54F that make up the second refrigerant line 54, will be explained with reference to FIGS 5 to 8.

The intermediate part of the supply-side pipes 45A, 45C, 45E and discharge-side pipes 45B, 45D, 45F of the first refrigerant line 45, and the supply-side pipes 54A, 54C, 54E and discharge-side pipes 54B, 54D, 54F of the second refrigerant line 54, are each positioned below the battery device 26. Specifically, the intermediate part of the supply-side pipes 45A, 45C, 45E and discharge-side pipes 45B, 45D, 45F are inserted through pipe insertion holes 28M provided on the front side plate 28F of the first support frame 28 that constitutes the battery frame 27, and pipe insertion holes 28N provided on the left side plate 28H. As a result, the supply-side pipes 45A, 45C, 45E and discharge-side pipes 45B, 45D, 45F are housed in the refrigerant line housing section 32 of the first support frame 28 in a horizontally parallel arrangement.

On the other hand, the intermediate part of the supply-side pipes 54A, 54C, 54E and discharge-side pipes 54B, 54D, 54F of the second refrigerant line 54 are inserted through pipe insertion holes 28M provided on the front side plate 28F of the first support frame 28 that constitutes the battery frame 27, and pipe insertion holes 28P provided on the right side plate 28J. As a result, the supply-side pipes 54A, 54C, 54E and discharge-side pipes 54B, 54D, 54F are housed in the refrigerant line housing section 32 of the first support frame 28 in a horizontally parallel arrangement.

In this way, the first refrigerant line 45 and the second refrigerant line 54 are divided into two groups with a space in the left-right direction and are positioned below the battery device 26. As a result, the cooling water flowing through the first refrigerant line 45 and the cooling water flowing through the second refrigerant line 54 can be cooled using the battery device 26, which maintains a temperature of about 25°C.

At the connection part 45G between the supply-side pipes 45A, 45C, 45E of the first refrigerant line 45 and the first tank 44, a supply-side first on-off valve 59 is provided adjacent to each cooling water pump 46. The supply-side first on-off valve 59 is positioned at the lower end of the first supply-side bent part 45J provided on the supply-side pipes 45A, 45C, 45E. The supply-side first on-off valve 59 can be switched between an open position, which allows communication through the supply-side pipes 45A, 45C, 45E, and a closed position, which blocks them, by manually operating a control lever, for example.

At the connection part 45H between the discharge-side pipes 45B, 45D, 45F of the first refrigerant line 45 and the first tank 44, a discharge-side first on-off valve 60 is provided. The discharge-side first on-off valve 60 is positioned at the lower end of the first discharge-side bent part 45K provided on the discharge-side pipes 45B, 45D, 45F. The discharge-side first on-off valve 60 can be switched between an open position, which allows communication through the discharge-side pipes 45B, 45D, 45F, and a closed position, which blocks them, by manually operating a control lever, for example. It should be noted that in FIG. 6, plurality supply-side first on-off valves 59 and discharge-side first on-off valves 60 are shown in an overlapping state in the left-right direction.

At the connection part 54G between the supply-side pipes 54A, 54C, 54E of the second refrigerant line 54 and the second tank 53, a supply-side second on-off valve 61 is provided adjacent to each cooling water pump 55. The supply-side second on-off valve 61 is positioned at the lower end of the second supply-side bent part 54J provided on the supply-side pipes 54A, 54C, 54E. The supply-side second on-off valve 61 can be switched between an open position, which allows communication through the supply-side pipes 54A, 54C, 54E, and a closed position, which blocks them, by operating a control lever, for example.

At the connection part 54H between the discharge-side pipes 54B, 54D, 54F of the second refrigerant line 54 and the second tank 53, a discharge-side second on-off valve 62 is provided. The discharge-side second on-off valve 62 is positioned at the lower end of the second discharge-side bent part 54K provided on the discharge-side pipes 54B, 54D, 54F. The discharge-side second on-off valve 62 can be switched between an open position, which allows communication through the discharge-side pipes 54B, 54D, 54F, and a closed position, which blocks them, by operating a control lever, for example. It should be noted that in FIG. 7, plurality supply-side second on-off valves 61 and discharge-side second on-off valves 62 are shown in an overlapping state in the left-right direction.

The dump truck 1 according to this embodiment has the above-described configuration, and the following describes the operation of hauling minerals mined in a mine using the dump truck 1.

The dump truck 1 loads minerals excavated by a hydraulic shovel onto the load-carrying platform 19 in the loading area and transports them to a dumping area located away from the loading area for unloading. The dump truck 1, for example, drives the travel electric motor 25 with power from the trolley overhead wire when traveling on an uphill road. Additionally, the dump truck 1 drives the travel electric motor 25 with power from the battery device 26 when traveling on a road without a trolley overhead wire, such as a flat road.

First, the dump truck 1 loads minerals excavated by a hydraulic shovel (not shown) onto the load-carrying platform 19 in the loading area. The loading area is usually on a flat road that does not require a large amount of power. Therefore, the travel electric motor 25 is driven by power from the battery device 26, and the dump truck 1 travels on the flat road within the loading area.

When the dump truck 1 travels on an uphill road from the loading area to the dumping area, the pantograph 42 of the current collector 40 provided at the front end of the vehicle body frame 5 is extended, and the collector shoe 42A of the pantograph 42 is slidably contacted with the trolley overhead wire installed on the uphill road. As a result, the travel electric motor 25 is driven by power from the trolley overhead wire, and the dump truck 1 travels on the uphill road towards the dumping area.

When the dump truck 1 reaches the flat dumping area, it travels within the dumping area using power from the battery device 26. Then, the dump truck 1 drives a hydraulic pump (not shown) with the hydraulic pump drive motor 36, and extends the hoist cylinder 20 with the pressure oil discharged from the hydraulic pump. This allows the load-carrying platform 19 to tilt around the connecting pin 19A, enabling the minerals loaded on the load-carrying platform 19 to be discharged into the unloading area. After discharging the minerals loaded on the load-carrying platform 19 into the unloading area, the dump truck 1 travels towards the loading area and loads new minerals onto the load-carrying platform 19 in the loading area.

In this manner, the dump truck 1 travels between the loading area and the unloading area, appropriately selecting power from the trolley overhead wire and the battery device 26 according to the road surface. Then, the dump truck 1 repeatedly hauls the minerals loaded onto the load-carrying platform 19 in the loading area to the unloading area and discharges them there.

During the operation of the dump truck 1, the battery device 26, composed of plurality battery modules 33, is cooled by the first cooling system 43. That is, the cooling water pump 46 of the first cooling system 43 is driven, and the cooling water in the first tank 44 is supplied to the refrigerant inlet 33A of the battery module 33 through the supply-side pipes 45A, 45C, 45E of the first refrigerant line 45. The cooling water supplied to the battery module 33 from the refrigerant inlet 33A cools the battery module 33 and then returns to the first tank 44 through the discharge-side pipes 45B, 45D, 45F of the first refrigerant line 45 from the refrigerant outlet 33B. The cooling water stored in the first tank 44 is cooled by the chiller unit 47.

In this way, during the operation of the dump truck 1, plurality battery modules 33 can be efficiently cooled by the first cooling system 43 equipped with a chiller unit 47. As a result, even if the battery module 33 generates heat due to charging and discharging power, the first cooling system 43 can maintain the temperature of the battery device 26 within an appropriate range of about 25°C. Therefore, even when the dump truck 1 operates in an environment where the outside temperature exceeds 25°C, the battery device 26 is maintained at a temperature lower than the outside temperature.

On the other hand, electrical device other than the battery device 26, such as the converter 34, reactor 35, hydraulic pump drive motor 36, and pump drive inverter 37, are cooled by the second cooling system 52. That is, the cooling water pump 55 of the second cooling system 52 is driven, and the cooling water in the second tank 53 is supplied to the converter 34, reactor 35, hydraulic pump drive motor 36, and pump drive inverter 37 from the refrigerant inlets 34A, 35A, 36A, 37A through the supply-side pipes 54A, 54C, 54E of the second refrigerant line 54. The cooling water supplied to the converter 34, reactor 35, hydraulic pump drive motor 36, and pump drive inverter 37 cools these devices and then returns to the second tank 53 through the discharge-side pipes 54B, 54D, 54F from the refrigerant outlets 34B, 35B, 36B, 37B. Additionally, the cooling water stored in the second tank 53 is cooled by the radiator 56.

In this way, even if the converter 34, reactor 35, hydraulic pump drive motor 36, and pump drive inverter 37, which are located behind the battery device 26, generate heat during the operation of the dump truck 1, these electrical devices can be cooled by the second cooling system 52.

Here, in this embodiment, the supply-side pipes 45A, 45C, 45E and discharge-side pipes 45B, 45D, 45F constituting the first refrigerant line 45, and the supply-side pipes 54A, 54C, 54E and discharge-side pipes 54B, 54D, 54F constituting the second refrigerant line 54, are arranged below the battery device 26. This allows the temperature of the cooling water for the battery device 26 flowing through the first refrigerant line 45 and the temperature of the cooling water for electrical device such as the converter 34 flowing through the second refrigerant line 54 to be cooled using the battery device 26 maintained at a stable temperature of about 25°C, even when the dump truck 1 operates in an environment where the outside temperature exceeds 25°C. As a result, the battery device 26 and electrical device such as the converter 34 can be efficiently cooled to remain within their respective appropriate temperature ranges.

Additionally, the first refrigerant line 45 connected to the first tank 44 and the second refrigerant line 54 connected to the second tank 53 are divided into two groups with a lateral spacing and arranged below the battery device 26. This allows the first refrigerant line 45 and the second refrigerant line 54 to be compactly arranged using the small space formed below the battery device 26. Furthermore, by dividing the first refrigerant line 45 and the second refrigerant line 54 into two groups, the workability of connecting the first refrigerant line 45 to the refrigerant inlets 33A and refrigerant outlets 33B of the plurality battery modules 33 constituting the battery device 26 can be improved. Similarly, the workability of connecting the second refrigerant line 54 to the refrigerant inlets 34A, 35A, 36A, 37A and refrigerant outlets 34B, 35B, 36B, 37B of the converter 34, reactor 35, hydraulic pump drive motor 36, and pump drive inverter 37 can be improved.

Next, the process of replacing parts of the first refrigerant line 45, such as the supply-side pipe 45A and discharge-side pipe 45B, in case they are damaged, will be explained.

One end of the supply-side pipe 45A is connected to the first tank 44. The other end of the supply-side pipe 45A is connected to the refrigerant inlets 33A of the four battery modules 33, which are located at the rear side among the plurality battery modules 33 constituting the battery device 26. The other end of the supply-side pipe 45A extends above the connection part 45G between one end of the supply-side pipe 45A and the first tank 44. Therefore, if the other end of the supply-side pipe 45A is removed from the refrigerant inlet 33A of the battery module 33, the cooling water inside the supply-side pipe 45A may flow into the first tank 44, causing the cooling water to overflow from the first tank 44.

In contrast, in this embodiment, a supply-side first on-off valve 59 is provided at the connection part 45G between one end of the supply-side pipe 45A and the first tank 44. Therefore, by switching the supply-side first on-off valve 59 to the closed position to block the supply-side pipe 45A, the other end of the supply-side pipe 45A can be removed from the refrigerant inlet 33A of the battery module 33. This prevents the cooling water inside the supply-side pipe 45A from flowing into the first tank 44, thereby improving the workability when replacing the damaged supply-side pipe 45A with a new supply-side pipe 45A.

Similarly, when removing the other end of the discharge-side pipe 45B from the refrigerant outlet 33B of the battery module 33, the discharge-side first on-off valve 60 provided at the connection part 45H between one end of the discharge-side pipe 45B and the first tank 44 is switched to the closed position. In this way, by blocking the discharge-side pipe 45B with the discharge-side first on-off valve 60, the other end of the discharge-side pipe 45B can be removed from the refrigerant outlet 33B of the battery module 33. This prevents the cooling water inside the discharge-side pipe 45B from flowing into the first tank 44, thereby improving the workability when replacing the discharge-side pipe 45B.

The replacement work for the aforementioned supply-side pipe 45A and discharge-side pipe 45B is similar for the replacement work of other supply-side pipes 45C, 45E and discharge-side pipes 45D, 45F constituting the first refrigerant line 45. Moreover, as shown in FIG. 6, the supply-side first on-off valve 59 is located at the lower end of the first supply-side bend part 45J provided at one end of the supply-side pipes 45A, 45C, 45E, and the discharge-side first on-off valve 60 is located at the lower end of the first discharge-side bend part 45K provided at one end of the discharge-side pipes 45B, 45D, 45F. Therefore, the supply-side first on-off valve 59 and discharge-side first on-off valve 60 can be positioned at a low ground level, allowing the switching between open and closed positions to be performed from the ground in a stable working posture.

On the other hand, one end of the supply-side pipe 54E constituting the second refrigerant line 54 is connected to the second tank 53, and the other end of the supply-side pipe 54E is connected to the refrigerant inlet 36A of the hydraulic pump drive motor 36 and the refrigerant inlet 37A of the pump drive inverter 37. The other end of the supply-side pipe 54E is positioned higher than the connection part 54G between one end of the supply-side pipe 54E and the second tank 53. Therefore, if the other end of the supply-side pipe 54E is removed from the refrigerant inlet 36A of the hydraulic pump drive motor 36 and the refrigerant inlet 37A of the pump drive inverter 37, the cooling water inside the supply-side pipe 54E may flow into the second tank 53, causing the cooling water to overflow from the second tank 53.

In contrast, in this embodiment, a supply-side second on-off valve 61 is provided at the connection part 54G between one end of the supply-side pipe 54E and the second tank 53. Therefore, by switching the supply-side second on-off valve 61 to the closed position and blocking the supply-side pipe 54E, the other end of the supply-side pipe 54E is removed from the refrigerant inlet 36A of the hydraulic pump drive motor 36 and the refrigerant inlet 37A of the pump drive inverter 37. This prevents the cooling water inside the supply-side pipe 54E from flowing into the second tank 53, thereby enhancing the workability when replacing a damaged supply-side pipe 54E with a new supply-side pipe 54E.

Similarly, when removing the other end of the discharge-side pipe 54F from the refrigerant outlet 36B of the hydraulic pump drive motor 36 and the refrigerant outlet 37B of the pump drive inverter 37, the discharge-side second on-off valve 62 provided at the connection part 54H between one end of the discharge-side pipe 54F and the second tank 53 is switched to the closed position. In this way, by blocking the discharge-side pipe 54F with the discharge-side second on-off valve 62, the other end of the discharge-side pipe 54F is removed from the refrigerant outlet 36B of the hydraulic pump drive motor 36 and the refrigerant outlet 37B of the pump drive inverter 37. This prevents the cooling water inside the discharge-side pipe 54F from flowing into the second tank 53, thereby enhancing the workability when replacing the discharge-side pipe 54F.

The replacement work of the aforementioned supply-side pipe 54E and discharge-side pipe 54F is similar to the replacement work of other supply-side pipes 54A, 54C and discharge-side pipes 54B, 54D that constitute the second refrigerant line 54. Moreover, as shown in FIG. 7, the supply-side second on-off valve 61 is located at the lower end of the second supply-side bend part 54J provided at one end of the supply-side pipes 54A, 54C, 54E, and the discharge-side second on-off valve 62 is located at the lower end of the second discharge-side bend part 54K provided at one end of the discharge-side pipes 54B, 54D, 54F. Therefore, the supply-side second on-off valve 61 and the discharge-side second on-off valve 62 can be positioned at a low ground level, allowing the switching operation between the open and closed positions to be performed from the ground in a stable working posture.

Thus, in the embodiment, in the dump truck 1 comprising a vehicle body frame 5 to which front wheels 3 and rear wheels 4 are attached, an electric motor 25 driving the rear wheels 4, a battery device 26 mounted on the vehicle body frame 5 supplying power to the electric motor 25, and electrical device including a converter 34 arranged behind the battery device 26, a first refrigerant line 45 through which refrigerant cooling the battery device 26 circulates and a second refrigerant line 54 through which refrigerant cooling the electrical device circulates are arranged below the battery device 26. The vehicle body frame 5 is provided with a first tank 44 storing refrigerant supplied to the first refrigerant line 45 and a second tank 53 storing refrigerant supplied to the second refrigerant line 54. The first refrigerant line 45 connected to the first tank 44 and the second refrigerant line 54 connected to the second tank 53 are arranged below the battery device 26, maintaining a distance from each other in two separate groups.

According to this configuration, the temperature of the cooling water for the battery device 26 flowing through the first refrigerant line 45 and the temperature of the cooling water for electrical device such as the converter 34 flowing through the second refrigerant line 54 can be maintained at a stable low temperature using the cooled battery device 26. As a result, the battery device 26 and electrical device (converter 34, reactor 35, hydraulic pump drive motor 36, pump drive inverter 37) can be efficiently cooled to remain within their respective appropriate temperature ranges.

Moreover, the first refrigerant line 45 and the second refrigerant line 54 can be compactly arranged using the small space formed below the battery device 26. Furthermore, by dividing the first refrigerant line 45 and the second refrigerant line 54 into two groups, the workability when connecting the first refrigerant line 45 to the battery device 26 can be enhanced. Similarly, the workability when connecting the second refrigerant line 54 to electrical device other than the battery device 26 (converter 34, reactor 35, hydraulic pump drive motor 36, pump drive inverter 37) can be enhanced.

In the embodiment, at the connection parts 45G and 45H between the first tank 44 and the first refrigerant line 45, a supply-side first on-off valve 59 and a discharge-side first on-off valve 60 for opening and closing the first refrigerant line 45 are provided, and at the connection parts 54G and 54H between the second tank 53 and the second refrigerant line 54, a supply-side second on-off valve 61 and a discharge-side second on-off valve 62 for opening and closing the second refrigerant line 54 are provided. According to this configuration, the first refrigerant line 45 can be blocked by the supply-side first on-off valve 59 and the discharge-side first on-off valve 60. This prevents the refrigerant inside the first refrigerant line 45 from overflowing from the first tank 44 when the first refrigerant line 45 is removed from the battery device 26. Additionally, by blocking the second refrigerant line 54 with the supply-side second on-off valve 61 and the discharge-side second on-off valve 62, the refrigerant inside the second refrigerant line 54 can be prevented from overflowing from the second tank 53 when the second refrigerant line 54 is removed from electrical device other than the battery device 26.

In the embodiment, the first refrigerant line 45 has a first supply-side bend part 45J and a first discharge-side bend part 45K that bend from the first tank 44 towards the underside of the battery device 26. The supply-side first on-off valve 59 is located at the lower end of the first supply-side bend part 45J, and the discharge-side first on-off valve 60 is located at the lower end of the first discharge-side bend part 45K. Additionally, the second refrigerant line 54 has a second supply-side bend part 54J and a second discharge-side bend part 54K that bend from the second tank 53 towards the underside of the battery device 26. The supply-side second on-off valve 61 is located at the lower end of the second supply-side bend part 54J, and the discharge-side second on-off valve 62 is located at the lower end of the second discharge-side bend part 54K.

According to this configuration, the supply-side first on-off valve 59, discharge-side first on-off valve 60, supply-side second on-off valve 61, and discharge-side second on-off valve 62 can each be positioned at a low ground level. As a result, the operation of connecting and disconnecting the first refrigerant line 45 with the supply-side first on-off valve 59 and discharge-side first on-off valve 60, and the operation of connecting and disconnecting the second refrigerant line 54 with the supply-side second on-off valve 61 and discharge-side second on-off valve 62 can be performed from the ground in a stable working posture.

In the embodiment, a trolley-type dump truck 1 equipped with a current collector 40 and a battery device 26 is illustrated. However, the present invention is not limited to this and can be applied to dump trucks not equipped with a current collector 40, for example.

### DESCRIPTION OF REFERENCE NUMERALS

1: Dump truck
3: Front wheel
4: Rear wheel
5: Vehicle body frame
25: Electric motor
26: Battery device
27: Battery frame
33: Battery module
34: Converter (electrical device)
35: Reactor (electrical device)
36: Hydraulic pump drive motor (electrical device)
37: Pump drive inverter (electrical device)
44: First tank
45: First refrigerant line
45G, 45H, 54G, 54H: Connection part
45J: First supply-side bending part (first bending part)
45K: First discharge-side bending part (first bending part)
53: Second tank
54: Second refrigerant line
54J: Second supply-side bending part (second bending part)
54K: Second discharge-side bending part (second bending part)
59: Supply-side first on-off valve (first on-off valve)
60: Discharge-side first on-off valve (first on-off valve)
61: Supply-side second on-off valve (second on-off valve)
62: Discharge-side second on-off valve (second on-off valve)

## Claims

1. A dump truck comprising:
a vehicle body frame to which wheels are attached;
an electric motor configured to drive the wheels;
a battery device mounted on the vehicle body frame and configured to supply power to the electric motor; and
at least one electrical device including a converter provided at the rear side of the battery device, wherein
a first refrigerant line configured to allow a refrigerant to pass therethrough for cooling the battery device and a second refrigerant line configured to allow a refrigerant to pass therethrough for cooling the at least one electrical device circulates are arranged below the battery device,
the vehicle body frame is provided with a first tank for storing a refrigerant supplied to the first refrigerant line and a second tank for storing a refrigerant supplied to the second refrigerant line, and
the first refrigerant line connected to the first tank and the second refrigerant line connected to the second tank are arranged as divided into two groups apart from each other at a distance below the battery device.

2. The dump truck according to claim 1, further comprising:
a first on-off valve for opening and closing the first refrigerant line provided at a connecting point of the first tank and the first refrigerant line; and
a second on-off valve for opening and closing the second refrigerant line provided at a connecting point of the second tank and the second refrigerant line.

3. The dump truck according to claim 2, wherein
the first refrigerant line has a first bent portion bending from the first tank toward below of the battery device, and the first on-off valve is arranged at a lower end of the first bent portion, and
the second refrigerant line has a second bent portion bending from the second tank toward below of the battery device, and the second on-off valve is arranged at a lower end of the second bent portion.
